**Europäisches Patentamt**

**European Patent Office**

**Office européen des brevets**

(11) Veröffentlichungsnummer: **0 257 317**
**A1**

(12) # EUROPÄISCHE PATENTANMELDUNG

(21) Anmeldenummer: **87110803.1**

(22) Anmeldetag: **25.07.87**

(51) Int. Cl.⁴: **C02F 7/00 , E02F 5/28**

(30) Priorität: **06.08.86 DE 3626618**
**03.09.86 DE 3630032**

(43) Veröffentlichungstag der Anmeldung:
**02.03.88 Patentblatt 88/09**

(84) Benannte Vertragsstaaten:
**AT BE CH DE FR LI NL SE**

(71) Anmelder: **Stallzus, Harry**
**Mecklenburgerstrasse 41**
**D-2300 Kiel 1(DE)**

(72) Erfinder: **Stallzus, Harry**
**Mecklenburgerstrasse 41**
**D-2300 Kiel 1(DE)**

(74) Vertreter: **Hansmann, Dierk, Dipl.-Ing.**
**Jessenstrasse 4**
**D-2000 Hamburg 50(DE)**

(54) **Vorrichtung zur Behandlung von Gewässerböden.**

(57) Es ist vorgesehen, bei einem verfahrbaren Schwimmkörper mit höhenverstellbaren Arbeitsarmen über Austrittsöffnungen unter Druck Wasser und Sauerstoff, gegebenenfalls unter Beimengung von Chemikalien, auszustoßen, um den abgelagerten Schlamm aufzurühren und zusätzlich Sauerstoff zuzuführen. Dabei wird im Arbeitsarm eine Mischkammer gebildet, um vor Austritt des Gemisches eine Feinverteilung von Sauerstoff vorzunehmen, und keine Blasenbildung entsteht.

FIG. 3

EP 0 257 317 A1

## Vorrichtung zur Behandlung von Gewässerböden

Die Erfindung bezieht sich auf eine Vorrichtung zur Behandlung von Gewässerböden mit abgelagerter, sauerstoffarmer Sedimentation, insbesondere durch Belüftung, wobei Arbeitsarme mit ihrem einen Ende an einem verfahrbaren Schwimmkörper höhenverschwenkbar über Gelenke angeordnet sind und mit ihrem anderen Ende des Arbeitsarmes dem Gewässerboden zugeordnet sind sowie im Endbereich über eine düsenartige Öffnung Sauerstoff als Druckluft in den Gewässerboden eindringbar ist.

Es ist bereits eine Anordnung dieser Art nach der DE-GM 1 970 980 bekanntgeworden. Hierbei ist aber vorgesehen, den Sauerstoff über entsprechende Einrichtungen direkt in den Boden einzuführen, d.h., daß eine Düse direkt im Schlamm oder Erdreich angeordnet ist. Der Mangel hierbei besteht darin, daß der Stauerstoff nicht in einer feinverteilten Form einbringbar ist und keine Aufwirbelung durchführbar ist, um Faulgase freizusetzen. Ferner wird durch den Zuführungs-und Halterungsaufbau mit Gelenkstellen im Wasser eine aufwendige Anordnung geschaffen.

Eine weitere Ausführung nach der GB-PS 595 291 beinhaltet zwar einen Ausstoß von Sauerstoff und· Wasser durch getrennte Düsen. Aber hierbei ist es nicht möglich, Sauerstoff in einer feinverteilten Form einzubringen und entsprechend eine Anreicherung mit Sauerstoff vorzunehmen, der durch die Faulgase oder dem Schlamm aufgenommen wird.

Die Aufgabe der Erfindung ist es, eine gattungsgemäße Anordnung zu verbessern und auf einfache Weise eine Flächenbearbeitung von Gewässerböden durchzuführen und einen Abbau abgelagerter, sauerstoffarmer Sedimentation mit einer guten Sauerstoffaufnahme zu ermöglichen und einen Einsatz mit einer selbsttätigen Einstellung einer robusten Einrichtung unabhängig von der Bodenbeschaffenheit zu gewährleisten.

Die Lösung dieser Aufgabe erfolgt erfindungsgemäß dadurch, daß jeder Arbeitsarm eine Mischkammer bildet, in die neben Sauerstoff gleichzeitig mindestens Wasser unter Druck zuführbar und über eine Austrittsöffnung gemeinsam mit dem Sauerstoff zur Aufwirbelung der Sedimente oberhalb des Gewässerbodens ausstoßbar ist.

Hierdurch ist es möglich, vor dem Austritt des Gemisches eine Feinverteilung von Sauerstoff vorzunehmen und auf den Boden einzubringen, so daß eine gute Aufnahme erfolgt und keine Blasenbildung entsteht. Gleichzeitig wird eine Aufwirbelung der Sedimentation herbeigeführt, und es werden auch entsprechende Faulgase freigesetzt sowie gleichzeitig eine Anreicherung mit Sauerstoff in fein verteilter Form durchgeführt. Durch die einfache Haltevorrichtung in Form der Arbeitsarme ist auf einfache Weise eine Flächenbearbeitung möglich und Hindernisse bzw. unterschiedliche Ausgestaltungen des Gewässerbodens werden durch die selbsttätig sich einstellende Arbeitsarme berücksichtigt, ohne die Funktionsfähigkeit zu beeinträchtigen.

Um eine Verbesserung der Bearbeitung herbeizuführen, wird vorgeschlagen, daß der Mischkammer im Arbeitsarm vor der Austrittsöffnung zusätzlich chemische Zusätze zur Neutralisierung des Bodens zuführbar sind. Es ist damit möglich, gleichzeitig eine Neutralisierung des Bodens zu erreichen und dabei einen aktiven Zersetzungsprozeß in bekannter Weise zu begünstigen.

Um ein Aufschwimmen des Arbeitsarmes zu vermeiden, wird vorgeschlagen, daß jeder Arbeitsarm zur Aufnahme von Balastwasser flutbar ausgebildet ist.

Um eine Einstellung der Zumischung nach den Erfordernissen der Schlammschicht zu ermöglichen, wird vorgeschlagen, daß die Rohre zur Sauerstoffzuführung und/oder zur Zuführung chemischer Zusätze in der gebildeten Mischkammer höheneinstellbar angeordnet sind.

Eine einfache Anordnung wird dadurch geschaffen, daß mehrere Arbeitsarme in einem verschwenkbaren Flächenelement als Schild fest angeordnet sind.

Um eine Behinderung durch Wurzelwerk oder Pflanzen zu vermeiden, wird in Anlehnung an bekannte Anordnungen vorgeschlagen, daß jeder Arbeitsarm an dem dem Gewässerboden zugewandten Ende in Bewegungsrichtung weisende Schneideelemente trägt.

Um auf einfache Weise eine selbsttätige Einstellung für eine vorgegebene Bearbeitungsfläche zu ermöglichen und gegebenenfalls ohne Bemannung eine kontinuierliche Bearbeitung durchgehend zu gewährleisten, wird vorgeschlagen, daß der Schwimmkörper über ein Zugseil oder dgl. mit einem Festpunkt im zu bearbeitenden Gewässer, wie einem Bodenanker, zur Bildung einer Fesselanordnung verbunden ist und das Zugseil längenveränderlich über eine Winde am Schwimmkörper angreift und daß der Schwimmkörper durch den Ausstoß über die Arbeitsarme und/oder einen Antrieb antreibbar ist. Hierdurch wird eine kreisförmige Bearbeitungsfläche um den Bodenanker ermöglicht, die auch ohne Aufsichtsperson selbsttätig eine Bearbeitung durchführt. Gegebenenfalls ist auch kein gesonderter Antrieb erforderlich, da der Rückstoß durch die Öffnungen der Arbeitsarme zur Fortbewegung ausnutzbar ist.

Weiterhin wird vorgeschlagen, daß das Zugseil durch ein kontinuierliches Auf-und Abspulen der Winde derart längenveränderlich ist, daß sich eine der Zugseillänge entsprechende kreisförmige Bearbeitungsfläche um den Festpunkt ergibt. Alternativ ist vorgesehen, daß das Zugseil durch ein kontinuierliches Aufspulen der Winde längenveränderlich ist und im Bereich des Festpunktes eine Freigabe des Zugseiles bzw. ein Ausklinken der Winde zur Herstellung der ursprünglichen Länge des Zugseiles derart durchführbar ist, daß sich eine der Zugseillänge entsprechende kreisförmige Bearbeitungsfläche um den Festpunkt ergibt.

Um eine Anordnung zu schaffen, die das Zugseil in einer gespannten Lage hält und auch ein nach außen gerichtetes Moment des Schwimmkörpers erzielt, wird vorgeschlagen, daß die Arbeitsarme mit ihrer Ausstoßrichtung in einem Winkel zur Längsachse des Schwimmkörpers angeordnet sind.

In der Zeichnung ist ein Ausführungsbeispiel der Erfindung schematisch dargestellt. Es zeigen:

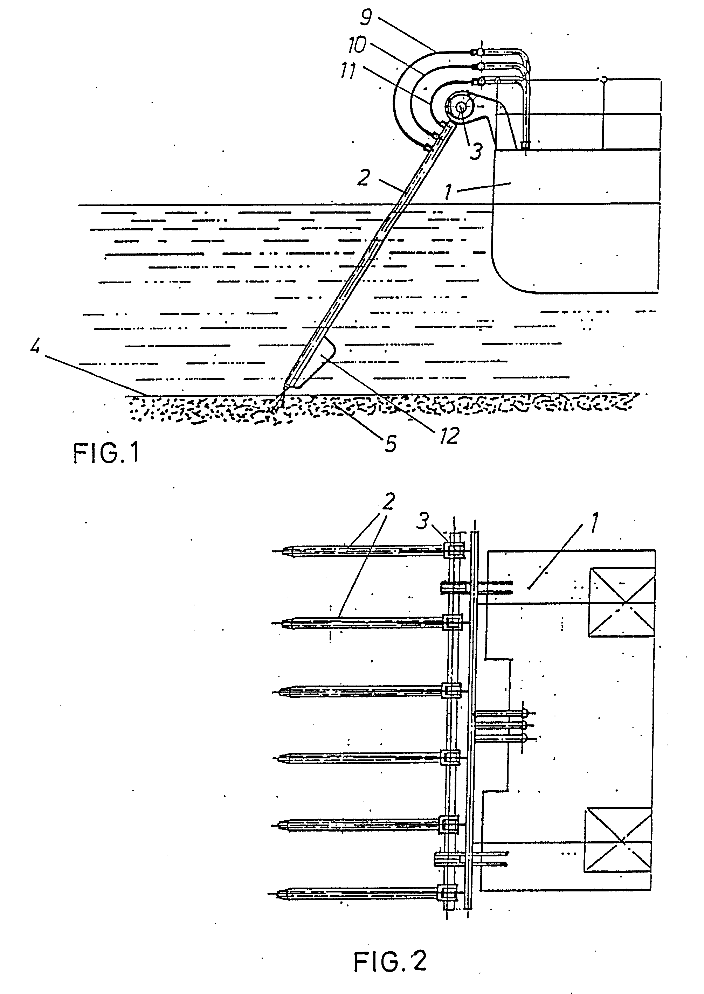

Fig. 1 eine Seitenansicht eines Arbeitsarmes,

Fig. 2 eine Draufsicht einer Vorrichtung mit mehreren parallelen Arbeitsarmen,

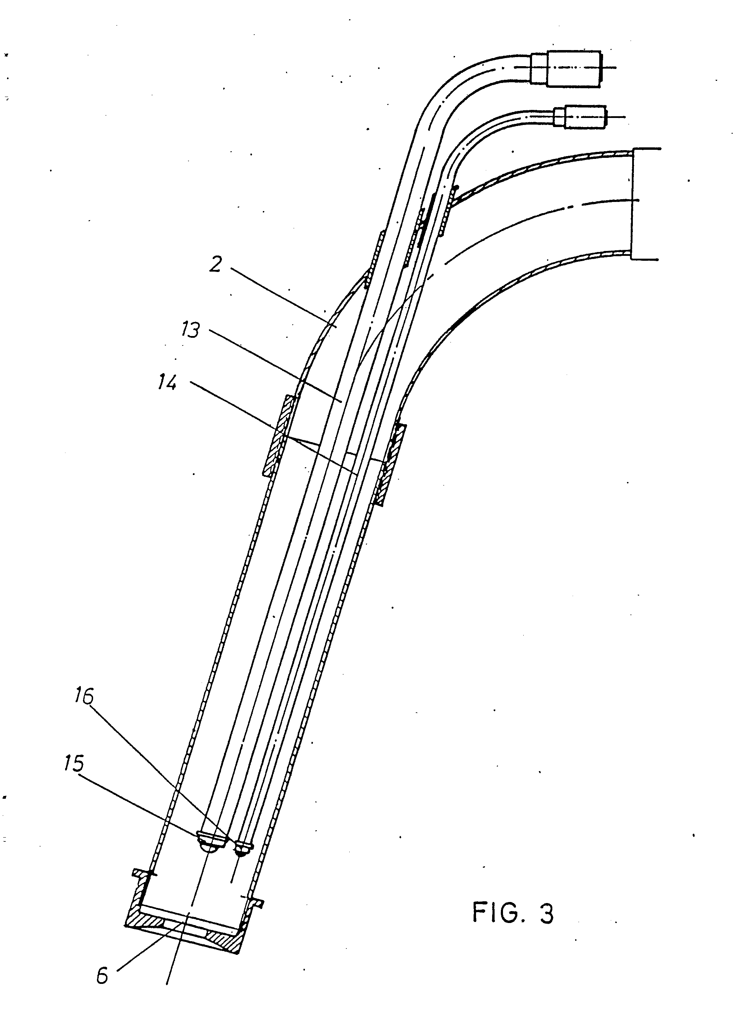

Fig. 3 eine Schnittdarstellung eines Arbeitsarmes mit Mischkammer,

Fig. 4 eine Gesamtvorrichtung in Draufsicht zur selbsttätigen Flächenbearbeitung

Bei der dargestellten Anordnung ist ein pontonartiger Schwimmkörper 1 angeordnet, der einen Eigenantrieb aufweist bzw. geschleppt wird. An seinem hinteren Ende sind Arbeitsarme 2 parallel zueinander entsprechend einer Harke höhenverschwenkbar über eine Gelenkanordnung 3 angeordnet, daß das untere Ende des Arbeitsarmes 2 jeweils den Gewässerboden 4 mit einer Schlammschicht 5 überstreicht. Die Arbeitsarme 2 werden dabei über Schwerkraft am Gewässerboden 4 gehalten und stellen sich über die Gelenkanordnung 3 am Schwimmkörper individuell auf unterschiedliche Tiefenverhältnisse ein sowie weichen auftretenden Hindernissen durch entsprechende Schwenkbewegungen aus.

Im unteren Endbereich des Arbeitsarmes 2 ist eine Austrittsöffnung 6 in Form einer Düse angeordnet. Der rohrförmige Arbeitsarm 2 ist dabei als Wasserzuführung ausgebildet, und es wird dabei im Bereich vor der Austrittsöffnung 6 eine Mischkammer ausgebildet, in die über gesonderte Rohre 13,14 mit Austrittsdüsen 15,16 Sauerstoff und/oder chemische Zusätze zugeführt werden. Hierdurch ist es möglich, eine bessere Verteilung der Zusätze zu bewirken und insbesondere eine wirkungsvolle, fein verteilte Sauerstoffzuführung in die Schlammschicht 5 zu ermöglichen und Faulgase freizusetzen.

Durch diese Anordnung ist es möglich, durch Bewegung des Schwimmkörpers 1 Bearbeitungsfelder anzulegen und den Schlammabbau zu ermöglichen. Um ein Verhaken und Festsetzen der Arbeitsarme zu verhindern, besitzen die Arbeitsarme 2 in Bewegungsrichtung weisende Schneideelemente 12, so daß entsprechende Pflanzen und Wurzelwerk keine Hindernisse bilden.

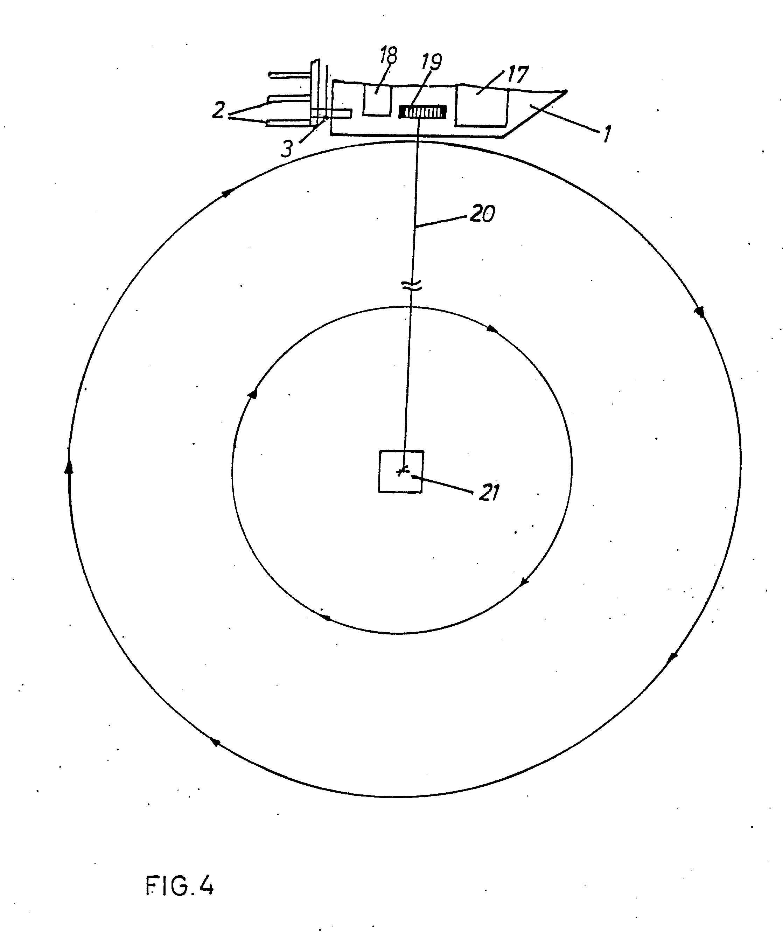

Gemäß Fig. 4 ist das Prinzip einer Flächenbearbeitung dargestellt, wobei der Schwimmkörper 1 als Floß ausgebildet ist und besitzt an seinem hinteren Ende parallel angeordnete Arbeitsarme 2 entsprechend einer Harke besitzt. Die Arbeitsarme 2 überstreichen den Gewässerboden und nehmen dabei eine Schräglage ein.

Die Zuführung der einzelnen Medien zum Arbeitsarm 2 erfolgt über Verbindungsleitungen von entsprechenden Aggregaten und Behältern 17, die der Schwimmkörper 1 aufnimmt.

Der Schwimmkörper 1 besitzt gegebenenfalls ein Antriebsaggregat 18, falls der Antrieb über die ausgestoßenen Medien der Arbeitsarme 2 nicht ausreicht. Zusätzlich ist eine Winde 19 angeordnet, die zum Auf-und Abspulen eines Zugseiles 20 ausgebildet ist. Dieses Zugseil 20 ist mit einem Bodenanker 21 des zu bearbeitenden Gewässers verbunden, so daß eine Fesselanordnung gebildet und über den Vortrieb des Schwimmkörpers 1 eine Kreisbahn entsprechend der Zugseillänge durchlaufen wird. Das Zugseil 20 wird hierbei verzögert über die Winde 19 aufgespult, um eine Veränderung der Umlaufbahn herbeizuführen und eine kreisförmige Bearbeitungsfläche um den Festpunkt 21 einzustellen. Bei aufgespultem Zugseil 20 erfolgt entweder der gleiche Vorgang in umgekehrter Richtung durch ein verzögertes Abspulen des Zugseiles 20 oder es erfolgt eine Freigabe des Zugseiles 20 bzw. ein Auslinken der Winde 19. Hierdurch wird der Schwimmkörper 1 wieder in seine Ausgangsposition gebracht und bestreicht einen Kreis entsprechend der größten Zugseillänge.

Durch eine derartige Ausbildung wird ermöglicht, größere Gewässerflächen selbsttätig zu bearbeiten und dabei ohne Bemannung des Schwimmkörpers auszukommen.

**Ansprüche**

1. Vorrichtung zur Behandlung von Gewässerböden mit abgelagerter, sauerstoffarmer Sedimentation, insbesondere durch Belüftung, wobei Arbeitsarme mit ihrem einen Ende an einem verfahrbaren Schwimmkörper höhenverschwenkbar über Gelenke angeordnet sind und mit ihrem anderen Ende des Arbeitsarmes dem Gewässerboden zugeordnet sind sowie im Endbereich über eine düsenartige Öffnung Sauerstoff als Druckluft in den Gewässerboden eindringbar ist, dadurch gekennzeichnet, daß jeder Arbeitsarm (2) eine Mischkammer bildet, in die neben Sauerstoff gleichzeitig mindestens Wasser unter Druck zuführbar und über eine Austrittsöffnung (6) gemeinsam mit dem Sauerstoff zur Aufwirbelung der Sedimente oberhalb des Gewässerbodens (4) ausstoßbar ist.

2. Vorrichtung nach Anspruch 1, dadurch gekennzeichnet, daß der Mischkammer im Arbeitsarm (2) vor der Austrittsöffnung (6) zusätzlich chemische Zusätze zur Neutralisierung des Bodens zuführbar sind.

3. Vorrichtung nach einem der Ansprüche 1 bis 2, dadurch gekennzeichnet, daß jeder Arbeitsarm (2) zur Aufnahme von Balastwasser flutbar ausgebildet ist.

4. Vorrichtung nach einem der Ansprüche 1 bis 3, dadurch gekennzeichnet, daß die Rohre (13,14) zur Sauerstoffzuführung und/oder zur Zuführung chemischer Zusätze in der gebildeten Mischkammer höheneinstellbar angeordnet sind.

5. Vorrichtung nach einem der Ansprüche 1 bis 4, dadurch gekennzeichnet, daß mehrere Arbeitsarme (2) in einem verschwenkbaren Flächenelement als Schild fest angeordnet sind.

6. Vorrichtung nach einem der Ansprüche 1 bis 5, dadurch gekennzeichnet, daß jeder Arbeitsarm (2) an dem dem Gewässerboden (4) zugewandten Ende in Bewegungsrichtung weisende Schneideelemente (12) trägt.

7. Vorrichtung nach einem der Ansprüche 1 bis 6, dadurch gekennzeichnet, daß der Schwimmkörper (1) über ein Zugseil (20) oder dgl. mit einem Festpunkt (21) im zu bearbeitenden Gewässer, wie einem Bodenanker, zur Bildung einer Fesselanordnung verbunden ist und das Zugseil (20) längenveränderlich über eine Winde (19) am Schwimmkörper (1) angreift und daß der Schwimmkörper (1) durch den Ausstoß über die Arbeitsarme (2) und/oder einen Antrieb (18) antreibbar ist.

8. Vorrichtung nach einem der Ansprüche 1 bis 7, dadurch gekennzeichnet, daß das Zugseil (20) durch ein kontinuierliches Auf-und Abspulen der Winde (19) derart längenveränderlich ist, daß sich eine der Zugseillänge entsprechende kreisförmige Bearbeitungsfläche um den Festpunkt (21) ergibt.

9. Vorrichtung nach einem derAnsprüche 1 bis 7, dadurch gekennzeichnet, daß das Zugseil (20) durch ein kontinuierliches Aufspulen der Winde (19) längenveränderlich ist und im Bereich des Festpunktes (21) eine Freigabe des Zugseiles (20) bzw. ein Ausklinken der Winde (19) zur Herstellung der ursprünglichen Länge des Zugseiles (20) derart durchführbar ist, daß sich eine der Zugseillänge entsprechende kreisförmige Bearbeitungsfläche um den Festpunkt (21) ergibt.

10. Vorrichtung nach einem der Ansprüche 1 bis 8, dadurch gekennzeichnet, daß die Arbeitsarme (2) mit ihrer Ausstoßrichtung in einem Winkel zur Längsachse des Schwimmkörpers (1) angeordnet sind.

FIG.1

FIG.2

0 257 317

FIG. 3

FIG.4

| | | |
|---|---|---|
| **Europäisches Patentamt** | **EUROPÄISCHER RECHERCHENBERICHT** | Nummer der Anmeldung |
| | | EP 87 11 0803 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 142 720 (BLUM) * Seite 2, Zeilen 15-29; Seite 2, Zeilen 19-30; Seite 4, Zeilen 11-34; Figuren 1-3 * --- | 1 | C 02 F 7/00 E 02 F 5/28 |
| Y | US-A-4 308 138 (WOLTMAN) * Spalte 3, Zeilen 15-30; Spalte 4, Zeilen 35-42; Figur 2 * --- | 1,2 | |
| Y | US-A-3 885 331 (MATHIEU) * Insgesamt * --- | 1,5 | |
| A | FR-A-2 442 924 (BAUDOT) * Seite 1, Zeilen 19-40; Seite 4, Zeilen 6-9; Figuren 2,3 * --- | 1,3,5 | |
| A | US-A-4 482 510 (KHUDENKO) * Insgesamt * --- | 7-9 | |
| A,D | GB-A- 595 291 (THE PROP. OF HAY'S WHARF) * Seite 2, linke Spalte, Zeile 70 - rechte Spalte, Zeile 83; Seite 3, linke Spalte, Zeilen 85-103; Figuren 1,2 * --- | 1,4 | **RECHERCHIERTE SACHGEBIETE (Int. Cl.4)** C 02 F E 02 F |
| A | DE-C- 893 630 (KÖSTER) --- | 1,6 | |
| A | DE-A-1 634 069 (HOLSTE) * Figur 3 * --- | 7-9 | |
| A | DE-C- 929 220 (MOLL et al.) * Figuren 1-4 * ----- | 1,5 | |

Der vorliegende Recherchenbericht wurde für alle Patentansprüche erstellt

| Recherchenort | Abschlußdatum der Recherche | Prüfer |
|---|---|---|
| DEN HAAG | 25-11-1987 | VANDOOREN D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)